# EUROPÄISCHE PATENTSCHRIFT

(11) **EP 3 966 089 B1**
(45) Veröffentlichungstag und Bekanntmachung des Hinweises auf die Patenterteilung: **30.08.2023**
(21) Anmeldenummer: 20712242.5
(22) Anmeldetag: 11.03.2020
(51) Int. Cl.: B62D 35/00, B62D 37/02

(54) **INTERAKTIONSVORRICHTUNG FÜR EIN FAHRZEUG**
INTERACTION DEVICE FOR A VEHICLE
DISPOSITIF D'INTERACTION POUR UN VÉHICULE

(30) Priorität: 10.05.2019 DE 102019206782
(43) Veröffentlichungstag der Anmeldung: 16.03.2022
(73) Patentinhaber: Audi AG, 85045 Ingolstadt (DE)
(72) Erfinder: MILOSEV, Zika, 85049 Ingolstadt (DE); DJURIC, Nikola, 85053 Ingolstadt (DE)
(86) Internationale Anmeldenummer: PCT/EP2020/056417
(87) Internationale Veröffentlichungsnummer: WO 2020/229015

(56) Entgegenhaltungen:
- WO-A1-03/068584
- WO-A2-02/051688
- DE-A1-102012 013 848
- US-B1- 10 137 825

## Beschreibung

Die Erfindung betrifft eine Interaktionsvorrichtung für ein Fahrzeug.

Bekannte Interaktionsvorrichtungen für Fahrzeuge geben einem Benutzer nach der Betätigung einer Fernbedienung zum Entriegeln bzw. Verriegeln des Fahrzeugs eine optische und/oder akustische Rückmeldung über den Zustand des Fahrzeugverriegelungssystems. Zudem verfügen Fahrzeuge über eine gesetzlich vorgeschriebene Standardbeleuchtung. Diese kann beispielsweise als Signalgeber (Lichthupe) für die Interaktion mit anderen Verkehrsteilnehmern verwendet werden und mit einer Hupe bzw. Signalhorn kombiniert werden. Eine aktive und automatisierte Interaktion zwischen Fahrzeugen und anderen Verkehrsteilnehmern, wie beispielsweise Fußgänger, Zweiradfahrer, Autofahrer usw. ist derzeit nicht bekannt. Als nachteilig kann dabei angesehen werden, dass es aufgrund fehlerhafter Einschätzung bzw. Wahrnehmung der Fahrzeuggeschwindigkeit beim Überqueren der Straße, insbesondere bei Fahrzeugen mit Elektro- oder Hybridantrieb und in geschlossenen Ortschaften, zu Gefahrensituationen kommen kann.

Aus der DE 10 2014 211 292 A1 ist eine Außenhaut-Anordnung für ein Fahrzeug, mit einer flexiblen Außenhaut, welche eine verstellbare Unterstruktur überspannt, welche eine Abstützbasis für die flexible Außenhaut bildet, und mit einem Aktuator bekannt, mittels welchem die die flexible Außenhaut abstützende Unterstruktur von einem eingefahrenen Zustand über einen Stellweg in einen ausgefahrenen Zustand verstellbar ist, und zwar unter Verformung der flexiblen Außenhaut. Hierbei weist die verstellbare Unterstruktur zur Bildung der Abstützbasis Segmente auf, welche zur Anpassung an die Verformung der flexiblen Außenhaut räumlich verstellbar sind.

Aus der WO 03/068584 A1 ist eine Platte mit kontrollierter Verformung bekannt, welche eine Folie aus elastisch verformbarem Material und ein Bündel von Spanndrähten aufweist, die in die Folie nahe einer der beiden Seitenflächen der Folie eingeführt sind. Die Spanndrähte sind an den Enden am Körper der Folie verankert; und die Platte weist auch Drahtspannvorrichtungen zum selektiven Ausüben von mechanischem Zug auf die Spanndrähte auf, um eine kontrollierte Verformung des Körpers der Folie zu erzeugen. Die Drahtspannvorrichtungen weist lineare Stellglieder auf, die entlang den Spanndrähten angeordnet sind und zumindest teilweise aus Formgedächtnismaterial hergestellt sind.

Aus der WO 02/051688 A1 ist eine zumindest bereichsweise bewegliche Kraftfahrzeugaußenhaut bekannt. Zur Bewegung dieser Außenhaut ist ein Aktuator vorgesehen, der ein polymeres und/oder ionenaustauschendes und/oder unterschiedliche Konformationen aufweisendes Material umfasst. Dieses Material ist durch physikalische oder chemische Effekte beweglich. Die neue Außenhaut einer Fahrzeugkarosserie soll zur Herstellung keine teuren Werkzeuge benötigen. Dazu besteht ein flächiger Abschnitt einer Außenhaut einer Fahrzeugkarosserie aus einem flexiblen Material. Ein flexibles Material, wie beispielsweise ein Stoff für Cabriolet-Verdecke, ist leicht beweglich, kann aber seine Oberfläche nicht vergrößern. Dieses Material ist zumindest über einen Teil eines Fahrzeuggerippes, wie beispielswiese einem Spaceframe, gespannt. Hierbei ist unter oder am Rand des Abschnitts mindestens ein mechanisch bewegbares Stellelement vorgesehen, welches die Außenhaut verformen kann. Das Stellelement ist normalerweise mit dem Fahrzeuggerippe verbunden.

Aus der DE 10 2012 013 848 A1 ist ein Vorderkotflügel für ein Kraftfahrzeug mit einem in montiertem Zustand des Vorderkotflügels einer Kraftfahrzeugaußenseite zugewandten Luftleitelement bekannt. Der Vorderkotflügel zeichnet sich dadurch aus, dass das Luftleitelement in einer ersten Funktionsstellung bündig mit einer das Luftleitelement umgebenden Oberfläche des Vorderkotflügels abschließt, wobei es in einer zweiten Funktionsstellung so von der umgebenden Oberfläche des Vorderkotflügels absteht, dass ein Luftwiderstand und vorzugsweise auch ein Abtrieb eines Kraftfahrzeugs, an welchem der Vorderkotflügel montiert ist, erhöht ist.

Aus der US 10,137,825 B1 ist eine Fahrzeugspiegelbaugruppe bekannt, welche eine erste Lichtquelle umfasst, die innerhalb eines Gehäuses angeordnet ist und mit einem erstes Lichtaustrittsfenster wirkgekoppelt ist, das an einem äußeren Abschnitt des Gehäuses angeordnet ist. Ein Sensor für eine angelehnte Tür ist in dem Fahrzeug angeordnet. Aus dem ersten Lichtaustrittsfenster wird emittiertes Licht durch ein Fenster des Fahrzeugs ausgestrahlt, wenn der Sensor für eine angelehnte Tür detektiert, dass sich eine Fahrzeugtür in einer offenen Position befindet.

Der Erfindung liegt die Aufgabe zu Grunde, eine Interaktionsvorrichtung für ein Fahrzeug bereitzustellen, welche eine aktive und automatisierte Interaktion zwischen dem Fahrzeug und anderen Verkehrsteilnehmern ermöglicht.

Diese Aufgabe wird durch eine Interaktionsvorrichtung für ein Fahrzeug mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Um eine Interaktionsvorrichtung für ein Fahrzeug bereitzustellen, welche eine aktive und automatisierte Interaktion zwischen dem Fahrzeug und Personen, insbesondere Fußgängern, im Fahrzeugumfeld ermöglicht, ist mindestens ein aktiven Außenverkleidungsteil, welches mindestens eine bewegbare sichtbare Komponente umfasst, eine Fahrzeugumfeldsensorik und ein Zugangsberechtigungssystem und/oder eine Fahrzeugzustandssensorik vorgesehen. Hierbei wertet eine Auswerte- und Steuereinheit Informationen der Fahrzeugumfeldsensorik und/oder des Zugangsberechtigungssystems und/oder der Fahrzeugzustandssensorik aus und steuert die mindestens eine bewegbare Komponente des mindestens einen aktiven Außenverkleidungsteils in Abhängigkeit von der Auswertung zur Interaktion mit anderen Verkehrsteilnehmern im Fahrzeugumfeld an. Mindestens eine erste bewegbare sichtbare Komponente ist als Außenspiegelgehäuse ausgeführt, welches über ein Stellmittel zwischen einer eingeklappten Ablageposition und einer ausgeklappten Betriebsposition verstellt werden kann. Bei der Verwendung des Außenspiegels können zur Interaktion mit Personen im Fahrzeugumfeld in vorteilhafter Weise bereits im Fahrzeug vorhandene Komponenten verwendet werden. Zusätzlich oder alternativ ist mindestens eine zweite bewegbare sichtbare Komponente als verstellbares Segment ausgeführt, welches über ein Stellmittel zwischen einer Ablageposition und einer aufgestellten Betriebsposition verstellt werden kann. Das Stellmittel kann beispielsweise einen elektrischen oder pneumatischen oder hydraulischen Antrieb umfassen. Hierbei verstellt die Auswerte- und Steuereinheit während des Fahrbetriebs zumindest eine der bewegbaren Komponenten als Erkennungsszenario über das korrespondierende Stellmittel mit einer vorgegebenen Umschaltfrequenz zwischen der Ablageposition und der Betriebsposition und zurück, wenn eine mögliche Gefährdung des anderen Verkehrsteilnehmers erkannt wird. Eines solche mögliche Gefährdung kann beispielsweise erkannt werden, wenn die Fahrzeugbeschleunigung bzw. die Fahrzeuggeschwindigkeit einen vorgegebenen Schwellwert übersteigt. Hierzu können vorzugsweise die als verstellbare Segmente ausgeführten bewegbaren zweiten Komponenten eingesetzt werden. Hierbei kann die mindestens eine bewegbare zweite Komponente in Abhängigkeit von Fahrzeugumgebung, Geschwindigkeit und Fahrweise in die Betriebsposition verstellt werden, um eine deutlich von weitem wahrnehmbare Fahrzeugoptik darzustellen. Zudem kann das Aufstellen des mindestens einen Segments geschwindigkeitsabhängig mit optischen Lichteffekten, welche beispielsweise im Hintergrund des aufgestellten Segments erzeugt werden, und/oder mit akustischen Effekten, welche beispielsweise über einen Außenlautsprecher ausgegeben werden, kombiniert werden, um die Wahrnehmbarkeit des Fahrzeugs weiter zu verbessern.

Durch Ausführungsformen der erfindungsgemäßen Interaktionsvorrichtung für ein Fahrzeug kann eine Fahrzeug-Mensch-Interaktion durch eine Änderung der Fahrzeugoptik umgesetzt werden, durch welche das Fahrzeug im fahrenden Zustand mit anderen Verkehrsteilnehmern und im geparkten Zustand mit berechtigten Benutzern und unberechtigten Personen im Fahrzeugumfeld interagieren kann. Hierbei kann die mindestens eine bewegbare Komponente in Abhängigkeit von Fahrzeugumgebung, Geschwindigkeit, Fahrweise und Betriebszustand eine sich ändernde Position einnehmen und die Fahrzeugoptik ändern. Mit der Änderung der Fahrzeugoptik können die anderen Verkehrsteilnehmer aktiv verstärkt auf den Fahrzeugzustand und die Fahrweise hingewiesen werden. Dadurch können Unfallrisiken reduziert werden.

In vorteilhafter Ausgestaltung der erfindungsgemäßen Interaktionsvorrichtung kann das mindestens eine aktive Außenverkleidungsteil beispielsweise als Außenspiegel oder als Seitenverkleidung als Türaußenhaut oder als Stoßfänger oder als Frontklappe oder Heckklappe oder als Fahrzeugdach ausgeführt sein.

In weiterer vorteilhafter Ausgestaltung der erfindungsgemäßen Interaktionsvorrichtung kann die Auswerte- und Steuereinheit während des Fahrbetriebs zur besseren Erkennung des Fahrzeugs zumindest eine der bewegbaren Komponenten über das korrespondierende Stellmittel von der Ablageposition in die Betriebsposition verstellen, wenn im Umfeld des Fahrzeugs mindestens ein anderer Verkehrsteilnehmer erkannt wird. Dadurch kann während des Fahrbetriebs die Wahrnehmung des Fahrzeugs für die anderen Verkehrsteilnehmer verbessert werden.

In weiterer vorteilhafter Ausgestaltung der erfindungsgemäßen Interaktionsvorrichtung kann die Auswerte- und Steuereinheit im geparkten Zustand des Fahrzeugs zumindest eine der bewegbaren Komponenten als Begrüßungsszenario über das korrespondierende Stellmittel mit einer ersten Umschaltfrequenz zwischen der Ablageposition und der Betriebsposition und zurück verstellt werden, wenn ein zugangsberechtigter Benutzer erkannt ist. Dadurch wird der erkannte sich dem Fahrzeug nähernde berechtigte Benutzer von dem geparkten Fahrzeug aktiv begrüßt. Dies baut zum Benutzer Vertrauen in das Fahrzeug auf und das Fahrzeug wird als "intelligentes" Objekt wahrgenommen. Diese positive Wahrnehmung ist insbesondere für die Akzeptanz in Bezug auf autonomes Fahren von Bedeutung. Hierzu können sowohl die als Außenspiegelgehäuse ausgeführten ersten Komponenten als auch die als Stellmittel ausgeführten zweiten Komponenten verwendet werden. So können beispielsweise die ersten und zweiten Komponenten in Abhängigkeit der Annäherung des berechtigten Benutzers angesteuert werden. Nähert sich der berechtige Benutzer beispielsweise von der Fahrerseite an, dann können die an der Fahrerseite angeordneten bewegbaren Komponenten angesteuert werden. Nähert sich der Fahrer von vorne an, dann können die im Frontbereich angeordneten bewegbaren Komponenten angesteuert werden usw. Zudem können die Positionsänderungen der bewegbaren Komponenten mit optischen Lichteffekten in ruhigen Farben, welche beispielsweise im Hintergrund des aufgestellten Segments erzeugt werden, und/oder mit akustischen Effekten, welche beispielsweise über einen Außenlautsprecher ausgegeben werden, kombiniert werden, um das Begrüßungsszenario zu ergänzen.

In weiterer vorteilhafter Ausgestaltung der erfindungsgemäßen Interaktionsvorrichtung kann die Auswerte- und Steuereinheit im geparkten Zustand des Fahrzeugs zumindest eine der bewegbaren Komponenten als Abschreckungsszenario über das korrespondierende Stellmittel mit einer zweiten Umschaltfrequenz zwischen der Ablageposition und der Betriebsposition und zurück verstellen, wenn eine Berührung des Fahrzeugs durch eine unberechtigte Person erkannt wird. Hierbei kann die erste Umschaltfrequenz des Begrü-ßungsszenarios niedriger als die zweite Umschaltfrequenz des Abschreckungsszenarios vorgegeben werden. Durch die korrespondierende schnelle Verstellung der Position des bewegbaren Komponenten können unberechtigte Personen, welche das Fahrzeug berühren, abgeschreckt und vertrieben werden. Zudem können die Positionsänderungen der bewegbaren Komponenten mit optischen Lichteffekten in aggressiven Farben, welche beispielsweise im Hintergrund des aufgestellten Segments erzeugt werden, und/oder mit lauten akustischen Effekten, welche beispielsweise über einen Außenlautsprecher ausgegeben werden, kombiniert werden, um den gewünschten Abschreckungseffekt zu verstärken.

In weiterer vorteilhafter Ausgestaltung der erfindungsgemäßen Interaktionsvorrichtung kann die Fahrzeugumfeldsensorik eine Berührungssensoreinheit und/oder eine Näherungssensoreinheit und/oder eine optische Sensoreinheit umfassen. Zudem kann die Fahrzeugzustandssensorik mindestens einen Beschleunigungssensor und/oder einen Geschwindigkeitssensor umfassen.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigen:
- Fig. 1: ein schematisches Blockdiagramm eines Ausführungsbeispiels einer erfindungsgemäßen Interaktionsvorrichtung für ein Fahrzeug;
- Fig. 2: eine schematische perspektivische Darstellung eines Fahrzeugs mit der erfindungsgemäßen Interaktionsvorrichtung für ein Fahrzeug aus Fig. 1 im deaktivierten Zustand; und
- Fig. 3: eine schematische perspektivische Darstellung des Fahrzeugs aus Fig. 2 mit der erfindungsgemäßen Interaktionsvorrichtung für ein Fahrzeug im aktivierten Zustand.

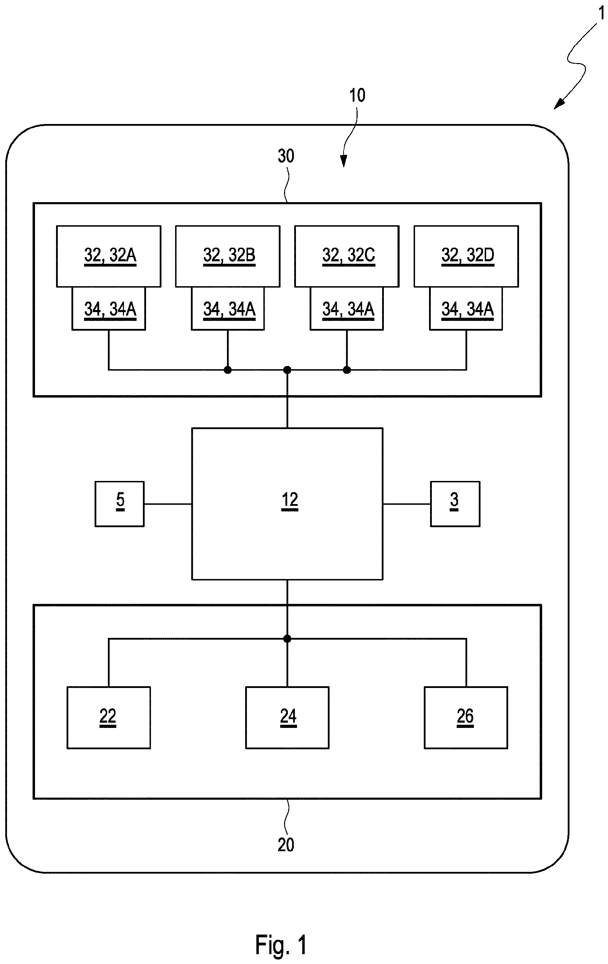

Wie aus Fig. 1 bis 3 ersichtlich ist, umfasst das dargestellte Ausführungsbeispiel einer erfindungsgemäßen Interaktionsvorrichtung 10 für ein Fahrzeug 1 mindestens ein aktives Außenverkleidungsteil 30, welches mindestens eine bewegbare sichtbare Komponente 32 umfasst, eine Fahrzeugumfeldsensorik 20 und ein Zugangsberechtigungssystem 3 sowie eine Fahrzeugzustandssensorik 5. Hierbei wertet eine Auswerte- und Steuereinheit 12 Informationen der Fahrzeugumfeldsensorik 20 und/oder des Zugangsberechtigungssystems 3 und/oder der Fahrzeugzustandssensorik 5 aus und steuert die mindestens eine bewegbare Komponente des mindestens einen aktiven Außenverkleidungsteils 30 in Abhängigkeit von der Auswertung zur Interaktion mit anderen Verkehrsteilnehmern im Fahrzeugumfeld an.

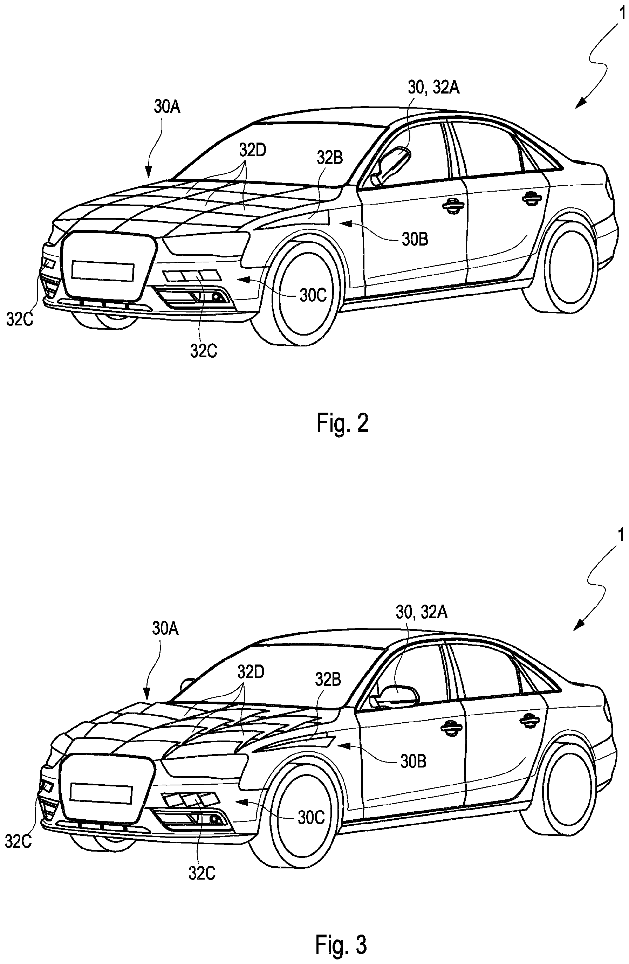

Wie aus Fig. 1 bis 3 weiter ersichtlich ist, umfasst das dargestellte Fahrzeug 1 mehrere aktive Außenverkleidungsteile 30. So umfassen beide Ausspiegel jeweils eine als Außenspiegelgehäuse 32A ausgeführte bewegbare und sichtbare erste Komponente 32, welche über ein entsprechendes Stellmittel 34 zwischen einer eingeklappten Ablageposition und einer ausgeklappten Betriebsposition verstellbar ist. Ein als Seitenverkleidung 30B ausgeführtes aktives Außenverkleidungsteil 30 umfasst im vorderen Bereich der Kotflügel jeweils eine als verstellbares Segment 32B ausgeführte bewegbare und sichtbare zweite Komponente 32, welche über ein entsprechendes Stellmittel 34 zwischen einer in Fig. 2 dargestellten Ablageposition und einer in Fig. 3 dargestellten aufgestellten Betriebsposition verstellbar ist. Ein als Stoßfänger 30C ausgeführtes aktives Außenverkleidungsteil 30 umfasst an beiden Seiten unterhalb der Scheinwerfer jeweils eine als verstellbares Segment 32C ausgeführte bewegbare und sichtbare zweite Komponente 32, welche über ein entsprechendes Stellmittel 34 zwischen einer in Fig. 2 dargestellten Ablageposition und einer in Fig. 3 dargestellten aufgestellten Betriebsposition verstellbar ist. Zudem ist ein aktives Außenverkleidungsteil 30 im dargestellten Ausführungsbeispiel als Frontklappe 30A ausgeführt, welche in mehrere Abschnitte aufgeteilt ist. Hierbei sind in jedem Abschnitt der Frontklappe 30A mehrere als verstellbare Segmente 32D ausgeführte bewegbare und sichtbare zweite Komponenten 32 über ein entsprechendes Stellmittel 34 zwischen einer in Fig. 2 dargestellten Ablageposition und einer in Fig. 3 dargestellten aufgestellten Betriebsposition verstellbar. Selbstverständlich können auch mehr bzw. weniger oder andere Außenverkleidungsteile wie Türaußenhaut oder Heckklappe oder Fahrzeugdach als aktive Außenverkleidungsteile 30 ausgeführt werden.

Die verstellbaren Segmente 32B, 32C, 32D können aus Leichtmetallen oder Verbundwerkstoffen oder anderen geeigneten Materialien hergestellt und in die entsprechenden aktiven Außenverkleidungsteile 30 integriert werden. Die Bewegung der bewegbaren und sichtbaren Komponenten 32 wird durch diverse Parameter in einer Steuerungssoftware geregelt. Ein Übertragungsmechanismus umfasst einen Zusammenbau aus Hebeln, Federn und Teleskopmechanismen, welche im dargestellten Ausführungsbeispiel über einen elektrischer Antrieb 34A angetrieben werden. Der Übertragungsmechanismus kann aber auch hydraulisch oder pneumatisch betriebene Elemente umfassen. Ein Nebeneffekt der Interaktionen ist die Änderung der Fahrzeugaerodynamik. Aus diesem Grund erfolgen die Interaktionen primär im Stadtverkehr. Allerdings ist der Einfluss auf den Luftwiderstand des Fahrzeugs 1 gering. Zudem könnte der Luftwiderstand durch eine entsprechende Gestaltung der bewegbaren und sichtbaren zweiten Komponenten 32 auch verbessert werden.

Wie aus Fig. 1 weiter ersichtlich ist, umfasst die Fahrzeugumfeldsensorik 20 im dargestellten Ausführungsbeispiel eine Berührungssensoreinheit 22 und eine Näherungssensoreinheit 24 sowie eine optische Sensoreinheit 26, über welche das Umfeld des Fahrzeugs 1 erfasst und zur Erkennung von Objekten und Fußgängern ausgewertet wird. Über das Zugangsberechtigungssystem 3 kann beispielsweise durch eine drahtlose Kommunikation zwischen dem Zugangsberechtigungssystem 3 und einem tragbaren Authentifizierungselement und/oder eine Gesichts- und/oder Stimmenerkennung ein berechtigter Benutzer erkannt werden. Die Fahrzeugzustandssensorik 5 umfasst im dargestellten Ausführungsbeispiel mindestens einen Beschleunigungssensor und einen Geschwindigkeitssensor.

Im dargestellten Ausführungsbeispiel verstellt die Auswerte- und Steuereinheit 12 während des Fahrbetriebs zur besseren Erkennung des Fahrzeugs 1 zumindest eine der bewegbaren Komponenten 32 über das korrespondierende Stellmittel 34 von der Ablageposition in die Betriebsposition, wenn im Umfeld des Fahrzeugs 1 mindestens ein anderer Verkehrsteilnehmer erkannt wird. Durch die bewirkte Änderung der Fahrzeugoptik werden die anderen Verkehrsteilnehmer aktiv auf den Fahrzeugzustand und die Fahrweise hingewiesen, so dass Unfallrisiken reduziert werden können. So führt die Auswerte- und Steuereinheit 12 im Fahrzustand des Fahrzeugs 1 ein Erkennungsszenario durch, wenn eine mögliche Gefährdung des anderen Verkehrsteilnehmers erkannt wird. Hierbei kann eine solche mögliche Gefährdung erkannt werden, wenn die Fahrzeugbeschleunigung bzw. die Fahrzeuggeschwindigkeit einen vorgegebenen Schwellwert übersteigt. Als Erkennungsszenario werden zumindest die in die Frontklappe 30A integrierten als verstellbare Segmente 32D ausgeführten bewegbaren und sichtbaren zweiten Komponente 32 mit der zweiten höheren Umschaltfrequenz zwischen der Ablageposition und der Betriebsposition und zurück verstellt, bis keine mögliche Gefährdung der anderen Verkehrsteilnehmer mehr erkannt wird. Zusätzlich können die in der Seitenverkleidung 30B und die seitlich im Stoßfänger 30C integrierten als verstellbare Segmente 32B, 32C ausgeführten bewegbaren und sichtbaren zweiten Komponente 32 in das Erkennungsszenario eingebunden und mit einer vorgegebenen Umschaltfrequenz zwischen der Ablageposition und der Betriebsposition und zurück verstellt werden.

Zudem führt die Auswerte- und Steuereinheit 12 im geparkten Zustand des Fahrzeugs 1 ein Begrüßungsszenario durch, wenn ein zugangsberechtigter Benutzer erkannt wird. Hierbei werden als Begrüßungsszenario zumindest die als Außenspiegelgehäuse 32A ausgeführten bewegbaren und sichtbaren ersten Komponente 32 für eine vorgebbare Zeitdauer oder für eine vorgebbare Wiederholungszahl mit einer ersten Umschaltfrequenz zwischen der Ablageposition und der Betriebsposition und zurück verstellt. Zusätzlich können die in der Seitenverkleidung 30B und die seitlich im Stoßfänger 30C integrierten als verstellbare Segmente 32B, 32C ausgeführten bewegbaren und sichtbaren zweiten Komponente 32 in das Begrüßungsszenario eingebunden und mit der ersten Umschaltfrequenz zwischen der Ablageposition und der Betriebsposition und zurück verstellt werden.

Des Weiteren führt die Auswerte- und Steuereinheit 12 im geparkten Zustand des Fahrzeugs 1 ein Abschreckungsszenario durch, wenn eine Berührung des Fahrzeugs 1 durch eine unberechtigte Person erkannt wird. Hierbei werden als Abschreckungsszenario zumindest die in die Frontklappe 30A integrierten als verstellbare Segmente 32D ausgeführten bewegbaren und sichtbaren zweiten Komponente 32 für eine vorgebbare Zeitdauer oder für eine vorgebbare Wiederholungszahl oder bis sich die unberechtigte Person vom Fahrzeug 1 entfernt mit einer zweiten höheren Umschaltfrequenz zwischen der Ablageposition und der Betriebsposition und zurück verstellt. Zusätzlich können die in der Seitenverkleidung 30B und die seitlich im Stoßfänger 30C integrierten als verstellbare Segmente 32B, 32C ausgeführten bewegbaren und sichtbaren zweiten Komponente 32 und die als Außenspiegelgehäuse 32A ausgeführten bewegbaren und sichtbaren ersten Komponente 32 in das Abschreckungsszenario eingebunden und mit der zweiten Umschaltfrequenz zwischen der Ablageposition und der Betriebsposition und zurück verstellt werden.

### BEZUGSZEICHENLISTE

- 1: Fahrzeug
- 3: Zugangsberechtigungssystem
- 5: Fahrzeugzustandssensorik
- 10: Auswerte- und Steuereinheit
- 20: Fahrzeugumfeldsensorik
- 22: optische Sensoreinheit
- 24: Näherungssensoreinheit
- 26: Berührungssensoreinheit
- 30: aktiven Außenverkleidungsteil
- 30A: Frontklappe
- 30B: Seitenverkleidung
- 30C: Stoßfänger
- 32: bewegbare sichtbare Komponente
- 32A: Außenspiegelgehäuse
- 32B, 32C, 32D: bewegbares Oberflächensegment
- 34: Stellmittel
- 34A: Antrieb

## Patentansprüche

1. Interaktionsvorrichtung (10) für ein Fahrzeug (1), mit mindestens einem aktiven Außenverkleidungsteil (30), welches mindestens eine bewegbare sichtbare Komponente (32) umfasst, einer Fahrzeugumfeldsensorik (20) und einem Zugangsberechtigungssystem (3) und/oder einer Fahrzeugzustandssensorik (5), wobei eine Auswerte- und Steuereinheit (12) Informationen der Fahrzeugumfeldsensorik (20) und/oder des Zugangsberechtigungssystems (3) und/oder der Fahrzeugzustandssensorik (5) auswertet und die mindestens eine bewegbare Komponente (32) des mindestens einen aktiven Außenverkleidungsteils (30) in Abhängigkeit von der Auswertung zur Interaktion mit anderen Verkehrsteilnehmern im Fahrzeugumfeld ansteuert, wobei mindestens eine bewegbare sichtbare erste Komponente als Außenspiegelgehäuse (32A) ausgeführt ist, welches über ein Stellmittel (34) zwischen einer eingeklappten Ablageposition und einer ausgeklappten Betriebsposition verstellbar ist, und/oder mindestens eine bewegbare sichtbare zweite Komponente als verstellbares Segment (32B, 32C, 32D) ausgeführt ist, welches über das Stellmittel (34) zwischen einer Ablageposition und einer aufgestellten Betriebsposition verstellbar ist, wobei die Auswerte- und Steuereinheit (12) während des Fahrbetriebs zumindest eine der bewegbaren Komponenten (32) als Erkennungsszenario über das korrespondierende Stellmittel (34) mit einer vorgegebenen Umschaltfrequenz zwischen der Ablageposition und der Betriebsposition und zurück verstellt, wenn eine mögliche Gefährdung des anderen Verkehrsteilnehmers erkannt wird.

2. Interaktionsvorrichtung (10) nach Anspruch 1,
**dadurch gekennzeichnet, dass**
das mindestens eine aktive Außenverkleidungsteil (30) als Außenspiegel oder als Seitenverkleidung (30B) oder als Türaußenhaut oder als Stoßfänger (30C) oder als Frontklappe (30A) oder Heckklappe oder als Fahrzeugdach ausgeführt ist.

3. Interaktionsvorrichtung (10) nach Anspruch 1 oder 2,
**dadurch gekennzeichnet, dass**
das Stellmittel (34) einen elektrischer oder pneumatischen oder hydraulischen Antrieb (34A) umfasst.

4. Interaktionsvorrichtung (10) nach einem der Ansprüche 1 bis 3,
**dadurch gekennzeichnet, dass**
die Auswerte- und Steuereinheit (12) während des Fahrbetriebs zur besseren Erkennung des Fahrzeugs (1) zumindest eine der bewegbaren Komponenten (32) über das korrespondierende Stellmittel (34) von der Ablageposition in die Betriebsposition verstellt, wenn im Umfeld des Fahrzeugs (1) mindestens ein anderer Verkehrsteilnehmer erkannt wird.

5. Interaktionsvorrichtung (10) nach einem der Ansprüche 1 bis 4,
**dadurch gekennzeichnet, dass**
die Auswerte- und Steuereinheit (12) im geparkten Zustand des Fahrzeugs (1) zumindest eine der bewegbaren Komponenten (32) als Begrü-ßungsszenario über das korrespondierende Stellmittel (34) mit einer ersten Umschaltfrequenz zwischen der Ablageposition und der Betriebsposition und zurück verstellt, wenn ein zugangsberechtigter Benutzer erkannt wird.

6. Interaktionsvorrichtung (10) nach einem der Ansprüche 1 bis 5,
**dadurch gekennzeichnet, dass**
die Auswerte- und Steuereinheit (12) im geparkten Zustand des Fahrzeugs (1) zumindest eine der bewegbaren Komponenten (32) als Abschreckungsszenario über das korrespondierende Stellmittel (34) mit einer zweiten Umschaltfrequenz zwischen der Ablageposition und der Betriebsposition und zurück verstellt, wenn eine Berührung des Fahrzeugs (1) durch eine unberechtigte Person erkannt wird.

7. Interaktionsvorrichtung (10) nach Anspruch 5 oder 6,
**dadurch gekennzeichnet, dass**
die erste Umschaltfrequenz niedriger als die zweite Umschaltfrequenz vorgegeben ist.

8. Interaktionsvorrichtung (10) nach einem der Ansprüche 1 bis 7,
**dadurch gekennzeichnet, dass**
die Fahrzeugumfeldsensorik (20) eine Berührungssensoreinheit (22) und/oder eine Näherungssensoreinheit (24) und/oder eine optische Sensoreinheit (26) umfasst.

9. Interaktionsvorrichtung (10) nach einem der Ansprüche 1 bis 8,
**dadurch gekennzeichnet, dass**
die Fahrzeugzustandssensorik (5) mindestens einen Beschleunigungssensor und/oder einen Geschwindigkeitssensor umfasst.

## Claims

1. Interaction device (10) for a vehicle (1), comprising at least one active exterior trim part (30) that includes at least one movable visible component (32), a vehicle environment sensor system (20) and an access authorisation system (3) and/or a vehicle status sensor system (5)
wherein an evaluation and control unit (12) evaluates information from the vehicle environment sensor system (20) and/or the access authorisation system (3) and/or the vehicle status sensor system (5) and controls the at least one movable component (32) of the at least one active exterior trim part (30) as a function of the evaluation for interaction with other road users in the vehicle environment, at least one movable visible first component being configured as an exterior mirror housing (32A) that can be adjusted between a folded-in storage position and a folded-out operating position by means of an actuator (34), and/or at least one movable visible second component being configured as an adjustable segment (32B, 32C, 32D) that can be adjusted between a storage position and a deployed operating position by means of the actuator (34), wherein, during the driving operation, if a possible hazard to the other road user is detected, the evaluation and control unit (12) adjusts at least one of the movable components (32) as a recognition scenario between the storage position and the operating position and back by means of the corresponding actuator (34) at a specified switching frequency.

2. Interaction device (10) according to claim 1,
**characterised in that**
the at least one active exterior trim part (30) is configured as exterior mirror or as side trim (30B) or as door external skin or as bumper (30C) or as bonnet (30A) or tailgate or as vehicle roof.

3. Interaction device (10) according to claim 1 or 2,
**characterised in that**
the actuator (34) includes an electric or pneumatic or hydraulic drive (34A).

4. Interaction device (10) according to any one of claims 1 to 3,
**characterised in that**
the evaluation and control unit (12) adjusts at least one of the movable components (32) from the storage position to the operating position by means of the corresponding actuator (34) during the driving operation to improve recognition of the vehicle (1) if at least one other road user is detected in the vicinity of the vehicle (1).

5. Interaction device (10) according to any one of claims 1 to 4,
**characterised in that**
the evaluation and control unit (12), in the parked state of the vehicle (1), adjusts at least one of the movable components (32) as a welcome scenario by means of the corresponding actuator (34) with a first switching frequency between the storage position and the operating position and back when an access-authorised user is detected.

6. Interaction device (10) according to any one of claims 1 to 5,
**characterised in that**
the evaluation and control unit (12), in the parked state of the vehicle (1), adjusts at least one of the movable components (32) as a deterrent scenario by means of the corresponding actuator (34) with a second switching frequency between the storage position and the operating position and back if contact with the vehicle (1) by an unauthorised person is detected.

7. Interaction device (10) according to claim 5 or 6,
**characterised in that**
the first switching frequency is specified to be lower than the second switching frequency.

8. Interaction device (10) according to any one of claims 1 to 7,
**characterised in that**
the vehicle environment sensor system (20) includes a touch sensor unit (22) and/or a proximity sensor unit (24) and/or an optical sensor unit (26).

9. Interaction device (10) according to any one of claims 1 to 8,
**characterised in that**
the vehicle status sensor system (5) includes at least one acceleration sensor and/or a speed sensor.

## Revendications

1. Dispositif d'interaction (10) pour un véhicule (1), avec au moins une partie de revêtement extérieur (30) active qui comporte au moins un composant visible mobile (32), un système de détection d'environnement de véhicule (20) et un système d'autorisation d'accès (3) et/ou un système de détection d'état de véhicule (5)
dans lequel une unité d'évaluation et de commande (12) évalue des informations du système de détection d'environnement de véhicule (20) et/ou du système d'autorisation d'accès (3) et/ou du système de détection d'état de véhicule (5) et commande l'au moins un composant mobile (32) d'au moins une partie de revêtement extérieur (30) active en fonction de l'évaluation pour l'interaction avec d'autres usagers de la route dans l'environnement du véhicule, dans lequel au moins un premier composant visible mobile est réalisé comme boîtier de rétroviseur extérieur (32A) qui peut être déplacé par le biais d'un moyen de réglage (34) entre une position de dépôt pliée et une position de fonctionnement dépliée, et/ou au moins un second composant visible mobile est réalisé comme segment (32B, 32C, 32D) déplaçable, qui peut être déplacé par le biais du moyen de réglage (34) entre une position de dépôt et une position de fonctionnement placée, dans lequel l'unité d'évaluation et de commande (12) déplace pendant le mode de conduite au moins un des composants (32) mobiles comme scénario de reconnaissance par le biais du moyen de réglage (34) correspondant avec une fréquence de commutation prédéfinie entre la position de dépôt et la position de fonctionnement et retour lorsqu'un risque possible de l'autre usager de la route est reconnu.

2. Dispositif d'interaction (10) selon la revendication 1,
**caractérisé en ce que**
l'au moins une partie de revêtement extérieur (30) actif est réalisée comme rétroviseur extérieur ou comme revêtement latéral (30B) ou comme peau extérieure de porte ou comme pare-chocs (30C) ou comme capot (30A) ou hayon ou comme toit de véhicule.

3. Dispositif d'interaction (10) selon la revendication 1 ou 2,
**caractérisé en ce que**
le moyen de réglage (34) comporte un entraînement électrique ou pneumatique ou hydraulique (34A).

4. Dispositif d'interaction (10) selon l'une quelconque des revendications 1 à 3,
**caractérisé en ce que**
l'unité d'évaluation et de commande (12) déplace pendant le mode de conduite pour une meilleure reconnaissance du véhicule (1) au moins un des composants mobiles (32) par le biais du moyen de réglage (34) correspondant de la position de dépôt dans la position de fonctionnement lorsque dans l'environnement du véhicule (1), au moins un autre usager de la route est reconnu.

5. Dispositif d'interaction (10) selon l'une quelconque des revendications 1 à 4,
**caractérisé en ce que**
le dispositif d'évaluation et de commande (12) déplace dans l'état stationné du véhicule (1) au moins un des composants mobiles (32) comme scénario d'accueil par le biais du moyen de réglage (34) correspondant avec une première fréquence de commutation entre la position de dépôt et la position de fonctionnement et retour lorsqu'un utilisateur à accès autorisé est reconnu.

6. Dispositif d'interaction (10) selon l'une quelconque des revendications 1 à 5,
**caractérisé en ce que**
le dispositif d'évaluation et de commande (12) déplace dans l'état stationné du véhicule (1) au moins un des composants mobiles (32) comme scénario de dissuasion par le biais du moyen de réglage (34) correspondant avec une seconde fréquence de commutation entre la position de dépôt et la position de fonctionnement et retour lorsqu'un contact du véhicule (1) par une personne non autorisée est reconnu.

7. Dispositif d'interaction (10) selon la revendication 5 ou 6,
**caractérisé en ce que**
la première fréquence de commutation est prédéfinie plus faible que la seconde fréquence de commutation.

8. Dispositif d'interaction (10) selon l'une quelconque des revendications 1 à 7,
**caractérisé en ce que**
le système de détection d'environnement de véhicule (20) comporte une unité de capteur de contact (22) et/ou une unité de capteur de proximité (24) et/ou une unité de capteur optique (26).

9. Dispositif d'interaction (10) selon l'une quelconque des revendications 1 à 8,
**caractérisé en ce que**
le système de détection d'état de véhicule (5) comporte au moins un capteur d'accélération et/ou un capteur de vitesse.
